# EUROPEAN PATENT SPECIFICATION

(11) **EP 1 522 067 B1**
(45) Date of publication and mention of the grant of the patent: **26.08.2009**
(21) Application number: 03735902.3
(22) Date of filing: 25.06.2003
(51) Int. Cl.: G11B 7/135, G11B 7/24

(54) **OPTICAL RECORDING AND READING SYSTEM, AND USE OF AN OPTICAL DATA STORAGE MEDIUM IN SUCH A SYSTEM**
OPTISCHES AUFZEICHNUNGS- UND LESESYSTEM UND VERWENDUNG EINES OPTISCHEN DATENSPEICHERMEDIUM IN EINEM SOLCHEN SYSTEM
SYSTEME D'ENREGISTREMENT ET DE LECTURE OPTIQUE, ET UTILISATION D'UN SUPPORT DE MEMORISATION DE DONNEES OPTIQUES DANS CE SYSTEME

(30) Priority: 10.07.2002 EP 02077754
(43) Date of publication of application: 13.04.2005
(73) Proprietor: Koninklijke Philips Electronics N.V., 5621 BA Eindhoven (NL)
(72) Inventor: VAN DER MARK, Martinus, B., NL-5656 AA Eindhoven (NL); PHILIPS, Gavin, N., NL-5656 AA Eindhoven (NL)
(74) Representative: van Liempd, Jan
(86) International application number: PCT/IB2003/002726
(87) International publication number: WO 2004/008444

(56) References cited:
- EP-A- 0 406 569
- WO-A-02/49024
- GB-A- 2 110 115
- US-A- 4 983 505
- US-A- 5 311 500
- US-A1- 2002 015 373
- US-A1- 2002 015 914
- US-B1- 6 298 029

## Description

The invention relates to an optical recording and reading system for use with an optical data storage medium, said system comprising:
- the medium having a recording stack, formed on a substrate, said recording stack suitable for recording by means of a focused radiation beam with a wavelength λ in air, the recording stack having a first optical surface most remote from the substrate; and
- an optical head, with an objective having a numerical aperture NA and from which objective the focused radiation beam emanates during recording, the objective arranged on the recording stack side of said optical data storage medium and having a second optical surface closest to the recording stack, and adapted for recording/reading at a free working distance d_{F} of smaller than 50 µm from the first optical surface.

The invention further relates to the use of an optical data storage medium having a recording stack, formed on a substrate, said recording stack suitable for recording by means of a focused radiation beam, with a wavelength λ, in air, the recording stack having a first optical surface most remote from the substrate in such a system.

An embodiment of a system of the type mentioned in the opening paragraph is known from United States Patent 6,069,853. A similar system is known from United States Patent 6,298,029 used for the two-part delimitation of appended claim 1.

New generations of optical recording disks have even larger data capacity and smaller bit sizes. There is a tendency that the wavelength for the optical readout decreases and the numerical aperture (NA) of the optical pick up unit (OPU) increases for each new generation. Focal length and working distance decrease, and tilt margins are become ever more stringent. The result is that the transparent layer through which the recording layer is being recorded and read is decreasing in thickness: 1.2 mm for Compact Disk (CD), 0.6 mm for Digital Versatile Disk, and 0.1 mm for Blu-ray Disk (BD) down to the level of a few microns for the "4^{th} generation" (magneto-) optical disks. The purpose of the layer is at least threefold: to make the disk more durable by protecting the information layer, to serve as an anti-reflection coating and to aid cooling of the storage layer.

For future generations of optical storage systems the numerical aperture of the objective will rise to NA=0.85, or even NA=0.95, to improve resolving power. Despite this tendency of the objective to increase in size, however, the increasing demand for high data rate and access time forces the total mass of the objective to shrink. This can only be accomplished if the focal length and hence the free working distance (FWD) is reduced.

However if the FWD is reduced the thickness of the transparent substrate, through which the focused radiation beam passes, needs to be reduced. Furthermore, if the NA is increased, then the allowance of the angle by which the medium surface is deviated from the perpendicular with respect to an optical axis of the optical system (tilt angle) is reduced under the effect of double refraction or aberration due to the thickness of the transparent substrate. Thus reduction of the effect of the tilt angle at high NA is another reason to decrease the thickness of the transparent substrate. This transparent substrate with reduced thickness is also called cover layer or more generally cover stack. Thus the purpose of the cover layer in 4^{th} generation optical recording is mainly to protect the recording stack from damage and to enable a low FWD. To record information in the above-mentioned (magneto-) optical data storage medium, a focused radiation beam, e.g. light, is radiated from an optical head through the transparent substrate having a thickness between 0.6 to 1.2 mm to the recording stack so as to heat the recording layers to a recording temperature. In case of magneto-optical (MO) media, at the same time, a magnetic field is applied by a magnetic head. Such magnetic field may be modulated with the information by use of a magnetic field modulation device. As a result, the information may be recorded on the recording medium.

Another argument for a small free working distance is the size of the coil in case of the magneto-optical data storage medium. If one wants a system with a high data rate, a large bandwidth to modulate the current through the coil is required. For data rates in the order of 100 - 200 Mbit/sec, the switching frequency of the current through the coil must be at least 1-2 GHz, in order to define sharp flanks in the switching behavior of the field. This requires a coil with a small self-inductance, low resistance and small parasitic capacitance. Apart from the speed of the coil, the power consumption by the coil is also an issue. Therefore it is preferable to use a small coil with a small inner diameter, e.g. smaller than 100 µm. The use of a bigger coil would compromise the data rate and energy efficiency because bigger coils have a larger inductance and a higher power consumption. The closer the coil is brought to the surface, the more energy efficient the magnetic field at the data storage medium can be modulated. However, a magnetic field in the order of 15 kA/m per Ampere of such a small coil penetrates only a few tens of microns into space, so the coil must be kept close to the recording stack and a cover layer that is thicker than e.g. 100 µm prevents this. To reproduce the information from the (magneto) optical data storage medium, light is also radiated by the optical system through the transparent substrate. In this situation, the optical head is also arranged on the transparent substrate side of the disk.

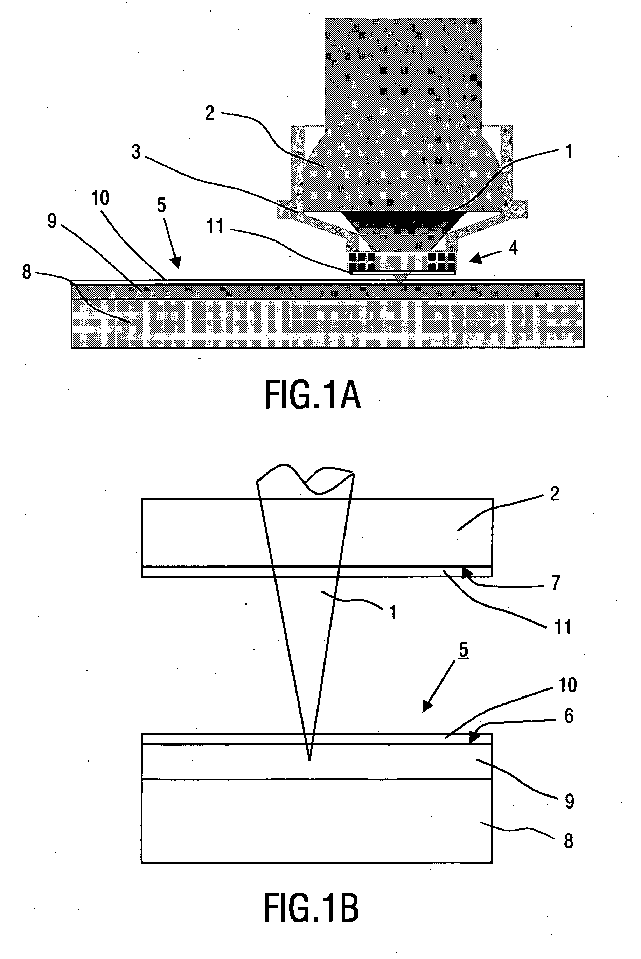

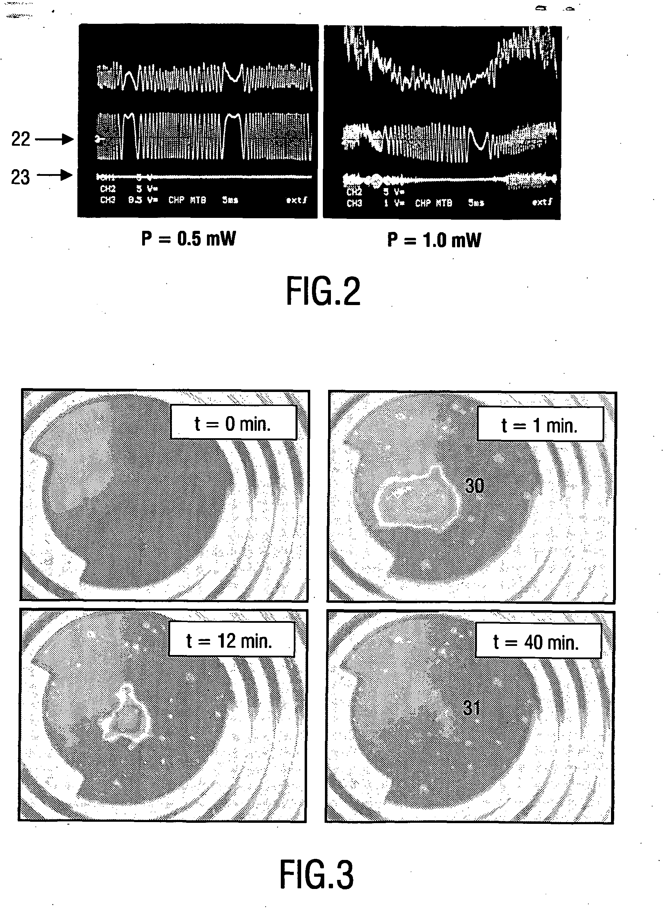

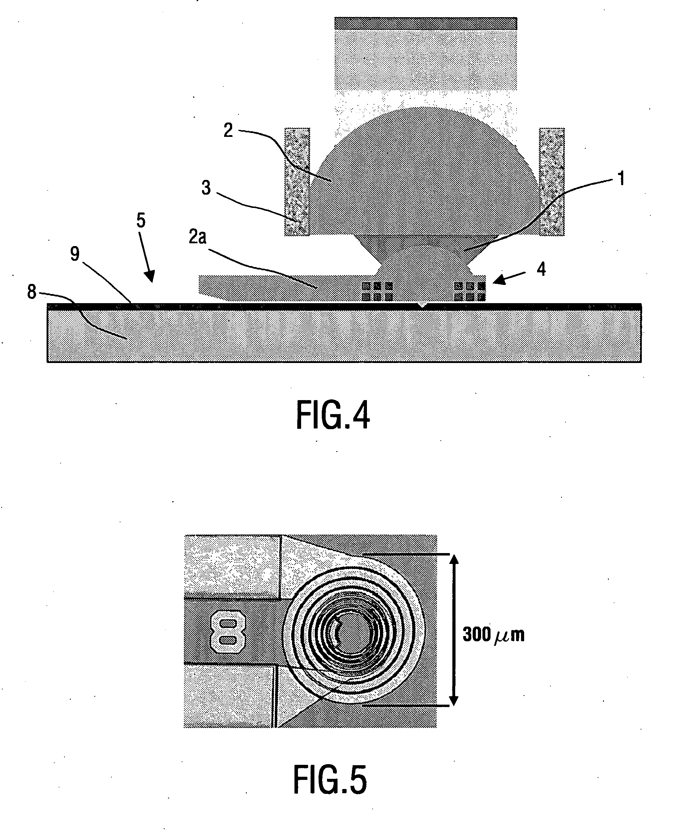

For objective lenses in optical heads, either slider-based (see Fig. 4 ) or actuator-based (see Fig. 1A), having a small working distance (typically less than 50 µm), contamination of the optical surface of the objective closest to the storage medium occurs. This is due to re-condensation of water, which may be desorbed from the storage medium because of the high surface temperature (approximately 250°C) resulting from the high radiation beam power and temperature required for writing data in (or even reading data from) the recording stack, see Fig. 3. The contamination ultimately results in malfunctioning of the optical storage system due to distortion of, for example, system control signals, see Fig. 2. The problem becomes more severe for the following cases: high humidity, high radiation beam power, low optical reflectivity of the recording stack of the data storage medium, low thermal conductivity of the storage medium, small working distance and high surface temperature. From patent US 6,069,853 it is known to increase the distance between the recording stack and the outer optical surface of the storage medium using a thermal insulator or cover layer, in order to prevent contamination of the objective. Without such insulator layer contamination from the medium may evaporate and condense onto the objective of the optical head during recording. Applicants have recognized that the contamination may e.g. be water mixed with small quantities of other contaminants. The water including other contaminants is probably present as a thin (mono)layer on the outer surface of the medium. When no insulator layer is present the thin (mono)layer is present very close to the recording stack and is indirectly heated by the recording stack, evaporates and subsequently condenses onto the objective including the other contaminants. This occurs relatively rapidly, i.e. within half an hour or possibly less, and causes unreliable recording and reading of the system and finally may lead to total recording and reading failure. An advantage of the application of the insulator or cover layer is the prevention of heating of the (mono)layer with contaminants and hence the build-up of contamination onto the objective. This is because the insulator layer forms an effective barrier which prevents the (mono)layer on the medium to be heated and evaporated. However such insulator layer, typically with a thickness of tens of nanometers or more, has several disadvantages. It may, e.g., cause unreliable recording and read out of data due to optical aberrations and interference of the insulator layer. Furthermore it may occur that the optical head focuses on the outer surface of the insulator layer in which data recording and read out is impossible after which event the optical head needs to refocus onto a subsequent surface. This procedure may lead to interruption of data streams and therefore unreliable data recording and reading. And furthermore, relatively thick insulator layer requires the MO magnetic coil to have a relatively large magnetic field distance range in axial direction of the coil, which limits the switching speed of the coil and thus the recording reliability at larger data rates.

It is an object of the invention to provide a system of the kind as described in the opening paragraph, which performs reliable recording and readout of data in the recording stack and prevents contamination of the objective of the optical head without the mentioned disadvantages.

It is a second object of the invention to provide use of an optical data storage medium for reliable recording and readout of data in a system of the kind as described in the opening paragraph.

These objects are achieved in accordance with the invention by an optical recording and reading system which is characterized in that the second optical surface is provided with a hydrophobic layer, that has a refractive index n and has a thickness smaller than 0.57λ/n. The first new insight is that re-condensation of water on the optics can be prevented by applying a relatively thin, transparent hydrophobic layer on the objective. Applying a thin hydrophobic layer on the recording stack of the optical data storage medium will prevent water from adsorbing in the first place, so that it cannot be desorbed later. Hence, the source for contamination is eliminated. When the thickness of the hydrophobic layer is kept below said limit optical aberrations and interference are counteracted. An important feature of the technique is that subsequent cleansing of the objective is not necessary. Also the range of humidity levels in which an optical drive operates reliably may be improved. Preferably the second optical surface is provided with a hydrophobic layer that has a thickness substantially equal to 0.25λ/n in which case it may act as an anti reflection coating. In practice it may be difficult to have a sufficiently hydrophobic layer on the objective. In that case the second optical surface preferably is provided with a hydrophylic layer that has a thickness substantially equal to 0.25λ/n. When using a hydrophylic layer, water which may be collected on the second optical surface forms a layer of substantially homogeneous thickness, which may e.g. be about a micron thick. This is because the surface wetting is homogeneous. The central portion of the fluid layer, i.e. the portion through which the radiation beam propagates, does not substantially disturb the wavefront of the focused radiation beam. Hydrophylic layers may be achieved by layers of which the hydrophylic properties typically result from oxygen atoms at the surface such as the case for Al₂O₃- or SiO₂ layers. Mostly the NA in such low FWD system is larger than 0.80.

In an embodiment the optical head further comprises a magnetic coil arranged at a side of the optical head closest to the recording stack such that an optical axis of the optical head traverses the center of the magnetic coil and the recording stack of the optical data storage medium is of the magneto-optical type. In this case reliable magneto optical recording is possible at a high density and data rate because a high NA, i.e. a small spot, is possible and the magnetic coil may be brought close to the recording stack in which case a magnetic field may be modulated in an energy efficient way.

It is especially advantageous when the magnetic coil has an inner diameter of smaller than 60 µm. The use of a bigger coil would compromise the data rate and energy efficiency because bigger coils have a large inductance and higher power consumption.

In an embodiment the hydrophobic layer comprises a material selected from the group of poly-para-xylylenes, fluorocarbons and copolymers thereof. Parylene is a generic name for a family of poly-para-xylylenes. Four different types are commercially available: Parylene-N is the most basic form, build as a linear chain of para-xylylene monomers. Other types are parylene-C, parylene-D and parylene-AF4. Notwithstanding the applicability of any dervative of parylene, parylene-C is of particular interest for our purpose. Another suitable material is AF 1600, made by Dupont, is a copolymer of tetrafluoroethylene and perfluoro-2,2-dimethyl-1,3-dioxole is especially suited.

In an embodiment the magnetic coil is contained in a slider, that is adapted for flying at a distance of > 0.5λ/n and < 2 µm from the first surface. In this case the slider forms part of the objective and the hydrophobic layer is present at the surface of the slider facing the optical data storage medium. Slider technology is e.g. known from hard disk drive (HDD) technology. With this technology "near field" configuration is possible in which case the outer surface of objective and the outer surface of the optical data storage medium are spaced from each other a distance of the order of much less than one wavelength λ, i.e. FWD ≤ λ/10. In such configuration coupling between the medium and the objective may be effected by evanescent wave optical coupling. The NA in such configuration can be greater than unity. Far field, i.e. FWD » λ/10, configuration is also possible with slider-based technology.

In an embodiment using the optical data storage medium in the system described above the first optical surface is provided with a transparent hydrophobic layer that has a refractive index n and has a thickness smaller than 0.5λ/n. When the thickness of the hydrophobic layer is kept below said limit optical aberrations and interference are counteracted. An important feature of applying the hydrophobic layer on the medium is that the necessity of a hydrophobic layer on the objective may be smaller because the source of contamination, i.e. the contamination on the medium, is eliminated or greatly reduced. This has the advantage that older optical recording systems which lack any measures taken to minimize the effect of condensation, e.g. a hydrophobic layer, on the objective of the optical head still benefit from the hydrophobic layer on the medium because the medium causes no or much less contamination. Also the range of humidity levels in which an optical drive operates reliably may be improved. Preferably the first optical surface is provided with a hydrophobic layer that has a thickness smaller than 0.25λ/n in which case even less optical aberrations and interference are present.

Preferably the hydrophobic layer on the medium comprises a material selected from the group of poly-para-xylylenes, fluorocarbons and copolymers thereof.

It is advantageous to use a material with a relatively high hardness in order to prevent damage of the hydrophobic layer due to possible contact of the optical head with the hydrophobic layer. When at least one of the medium and the objective has a hydrophobic layer, damage due to shear forces is greatly counteracted because of the extremely low coefficient of friction between the two layers.

The invention will be elucidated in greater detail by means of exemplary embodiments and with reference to the accompanying drawings, in which:
Fig. 1A shows an embodiment of the system according to the invention with small free working distance optics used in an MO drive;
Fig. 1B shows the structure of the layer stack of the medium of Fig. 1A;
Fig. 2 shows oscilloscope traces before and after contamination;
Fig. 3 shows microscope pictures of the contamination of the objective as a function of time;
Fig. 4 shows a slider-based optical recording system;
Fig. 5 shows a transparent slider with Magnetic Field Modulation coil;
Fig. 6 shows a microscope picture of the second optical surface of the objective with an insufficiently hydrophobic layer;
Fig. 7 shows a microscope picture of the second optical surface of the objective without a hydrophobic layer, but instead with a very hydrophylic layer.

In Fig. 1A and 1B, an embodiment is shown of an optical recording and reading system for use with an optical data storage medium 5. The medium 5 comprises a recording stack 9 formed on the substrate 8 by e.g. sputtering. The recording stack 9 is suitable for recording by a focused radiation beam 1. The wavelength λ of the focused radiation beam 1 is 405 nm. The recording stack 9 has a first optical surface 6 most remote from the substrate 8. An optical head 3, with an objective 2, having a numerical aperture NA = 0.85, from which the focused radiation beam 1 emanates during recording is present at the recording stack 9 side of said optical data storage medium 5. The objective 2 of the optical head 3 has a second optical surface 7 closest to the recording stack 9 and is adapted for recording/reading at a free working distance d_{F} = 15 µm from the first optical surface 6 of the medium 5. It is noted that the transparent element which contains a magnetic coil 4 forms part of the objective 2 and that the second optical surface 7 is the surface of this element closest to the medium 5. The first optical surface 6 and the second optical surface 7 are provided with a hydrophobic layer 10, 11 made of AF 1600, a copolymer of tetrafluoroethylene and perfluoro-2,2-dimethyl-1,3-dioxole, which has a refractive index of about 1.35. The thickness of the hyfrofobic layer is 30 nm. The preparation of fluoropolymer coatings such as AF1600 is done as follows. Depending on specific circumstances, a cleansing step of the disk surface may be required, consisting of sonification, rinsing and drying. When the disk is clean, a layer of fluorosilane is pre-deposited from the vapor phase at room temperature to improve adhesion of the fluoropolymer coating. The fluoropolymer coating can be made by means of dip coating or spin coating. To this end, the fluoropolymer, such as AF1600, can be dissolved in FC-75 (perfluoro-2-butyltetrahydrofuran, made by Acros). Finally the coated disk is dried in by air in a laminar flow. A thermal treatment is also possible at this point. Coating a disk with parylene, requires it to be thoroughly clean. On metal surfaces, parylene usually shows good adhesion, but on oxidic surfaces such as glass or aluminium oxide the adhesion is usually less. In those cases a layer of A174 (gamma-methacryl-oxypropyl-trimethoxysilane) is deposited first, either from the vapor phase at room temperature or by spin or dip coating in a 1:100:100 A174:water:iso-propanol mixture. Excess A174 is rinsed away with pure isopropanol, and the disk is dried at ambient temperature in clean air. Parylene deposition is performed in a commercially available parylene coating machine such as the PDS2010 (as can be purchased from SCS Europe). Essentially the parylene monomer is vaporized and deposited on the rotating substrate. Further, generally known, details can be found in literature. The optical head 3 further comprises a magnetic coil 4 arranged at a side of the optical head 3 closest to the recording stack 9. An optical axis of the optical head 3 traverses the center of the magnetic coil 4 and the recording stack 9 of the optical data storage medium 5 is of the magneto-optic type. The recording stack 9 may e.g. include, in this order starting at the substrate 8, a reflective metal layer as known in the art e.g. 25 nm Al, other auxiliary layers, a 24 nm layer of the magnetic material TbFeCo and a 60 nm interference layer of SiN or ZnS/ SiO₂.

When the medium 5 does not have a hydrophobic layer 10, a water (mono)layer mixed with contamination will build up on the first optical surface 6. When using an objective without hydrophobic layer 11 on the second optical surface recording for recording on such a medium, the recording system will in a matter of minutes show servo, e.g. focus or tracking, failure. This is illustrated in Fig 2. Fig 3 shows the contamination build-up at the second optical surface 7 when no hydrophobic layers 10, 11 are used. With at least one hydrophobic layer 10 at the first optical surface 6 the system proves to be stable and robust.

In Fig. 2 oscilloscope traces 22 and 23 are shown with the error signals of the radial open loop and closed loop focus servos respectively for two different laser beam powers P. The optical system is in focus, but the tracking servo has not been closed. At low power (P=0.5 mWatt), signals are normal. At higher power (P=1.0 mWatt) serious instability of the signals occurs due to contamination build-up at the second surface 7.

In Fig. 3 microscope photos of the second optical surface 7 of the objective 3 are shown without hydrophobic layer 11 and when is it still clean (t=0 min), and after contamination build-up after 1 min of relatively high laser power recording. Water is clearly visible indicated by reference numeral 30. The objective was left under the microscope to dry and observed again after 12 and 40 minutes. At t = 40 min the water has completely evaporated and contaminants indicated by reference numeral 31 are visible. The contaminants are redepositions of the evaporated water/contamination mixture layer on the first optical surface 6 of a medium 5 which does not have a hydrophobic layer 10. Application of a hydrophobic layer 10, 11 on respectively the first optical surface 6 and the second optical surface 7 of the medium 5 and/or the objective 2 greatly counteracts the problem of contamination build-up because no contamination build-up could be observed at moderate laser power.

In Fig. 4 a slider-based optical recording system is shown. The flying height of the slider 2a above the disk is approximately 1 µm. Note that this is not near field recording as defined earlier because 1 µm >> λ/10. In this example, the slider contains a Magnetic Field Modulation (MFM) coil 4, which is used for Magneto-Optical recording. Further reference numerals correspond to those in Fig. 1A. It is noted that the portion of the slider 2a through which the focused radiation beam 1 traverses forms part of the objective 2.

In Fig. 5 a transparent slider with Magnetic Field Modulation coil is shown. The laser beam of Fig. 4 is focused through the aperture in the middle.

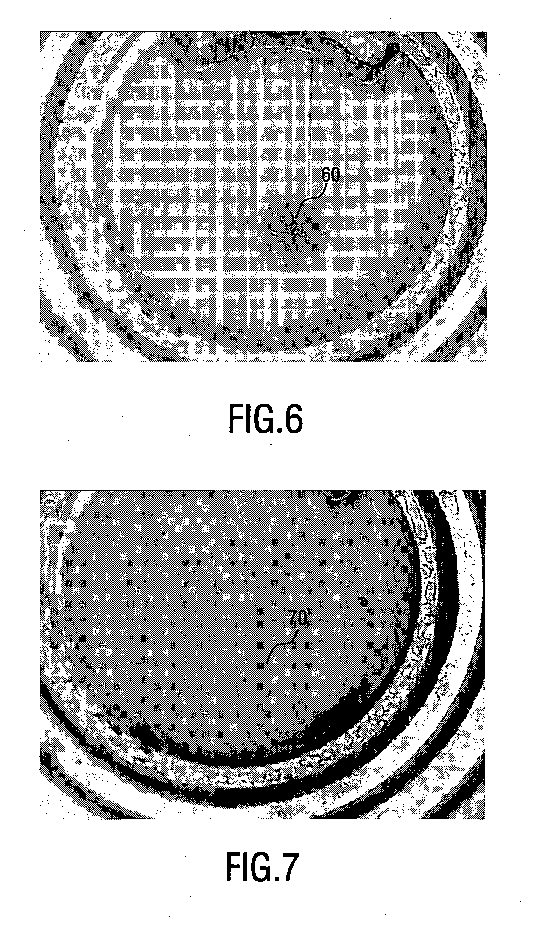

In Fig. 6 a microscope photo of the second optical surface 7 of the objective 3 is shown with an (insufficiently) hydrophobic layer 11. Insufficient refers to the value of the contact angle between a water droplet and the hydrophobic layer, which in this case is not much larger than 90 degrees, but which for an ideally hydrophobic layer is 180 degrees or close thereto. Due to the fact that the contact angle between water and surface is not much larger than 90 degrees, clearly some small droplets are formed and visible, as indicated by reference numeral 60. This cluster of droplets has a size both comparable to the free working distance between objective and recording medium and the diameter of the focused laser beam. The laser beam will be scattered substantially by the cluster of water droplets. The free working distance is the distance between the first optical surface 6 and the second optical surface 7.

In Fig. 7 a microscope photo of the second optical surface 7 of the objective 3 is shown without a hydrophobic layer, but instead with a very hydrophylic layer. The hydrophylic properties typically result from oxygen atoms at the surface such as the case for Al₂O₃ or SiO₂. The contact angle between liquid (water) and surface is now very small, i.e. much smaller than 90 degrees. As can be seen in the photo, a full layer of water with substantially homogeneous thickness is collected on the surface, indicated by reference numeral 70, as compared to Fig. 6 and the layer is about a micron thick and may even be thicker. Because the surface wetting is homogeneous, at least the central portion of the fluid water layer has an optically constant thickness and does not substantially disturb the wavefront of the focused laser beam.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

According to the invention an optical recording and reading system for use with an optical data storage medium is described. The system comprises the medium having a recording stack, formed on a substrate. The recording stack is suitable for recording by means of a focused radiation beam with a wavelength λ in air. The recording stack has a first optical surface most remote from the substrate. An optical head, with an objective having a numerical aperture NA and from which objective the focused radiation beam emanates during recording, is arranged on the recording stack side of said optical data storage medium. The objective has a second optical surface closest to the recording stack, and is adapted for recording/reading at a free working distance d_{F} of smaller than 50 µm from the first optical surface. At least one of the first optical surface and the second optical surface is provided with a transparent hydrophobic layer that has a refractive index n and has a thickness smaller than 0.5λ/n. In this way reliable recording and reading is achieved, specifically contamination build-up on the second optical surface is prevented or counteracted.

## Claims

1. An optical recording and reading system for use with an optical data storage medium (5), said system comprising:
- the medium (5) having a recording stack (9), formed on a substrate (8), said recording stack suitable for recording by means of a focused radiation beam (1) with a wavelength λ in air, the recording stack having a first optical surface (6) most remote from the substrate (8); and
- an optical head (3), with an objective (2) having a numerical aperture NA and from which objective (2) the focused radiation beam emanates (1) during recording, the objective (2) arranged on the recording stack (9) side of said optical data storage medium (5) and having a second optical surface (7) closest to the recording stack (9), and adapted for recording/reading at a free working distance d_{F} of smaller than 50 µm from the first optical surface (6), **characterized in that** the second optical surface (7) is provided with a transparent hydrophobic layer (10, 11) that has a refractive index n and has a thickness smaller than 0.5λ/n.

2. A system according to claim 1, wherein the second optical surface (7) is provided with a hydrophobic layer (11) that has a thickness substantially equal to 0.25λ/n.

3. A system according to claim 1, wherein the optical head (3) further comprises a magnetic coil (4) arranged at a side of the optical head (3) closest to the recording stack (9) such that an optical axis of the optical head (3) traverses the center of the magnetic coil (4) and the recording stack (9) of the optical data storage medium (5) is of the magneto-optical type.

4. A system according to claim 3, wherein the magnetic coil (4) has an inner diameter smaller than 60 µm.

5. A system according to any one of claims 1-4, wherein the hydrophobic layer (10, 11) comprises a material selected from the group of poly-para-xylylenes, fluorocarbons and copolymers thereof.

6. A system according to any one of claims 3-5, wherein the magnetic coil (4) is contained in a partially transparent slider, that is adapted for flying at a distance of > 0.5λ/n and < 2 µm from the first surface (6).

7. Use of an optical data storage medium (5) having a recording stack (9), formed on a substrate (8), said recording stack suitable for recording by means of a focused radiation beam (1), with a wavelength λ in air, the recording stack having a first optical surface most remote from the substrate, and the first optical surface (6) is provided with a transparent hydrophobic layer (10) that has a refractive index n and has a thickness smaller than 0.5λ/n in a system as claimed in anyone of claims 1-6 for preventing re-condensation of water droplets on the second optical surface of said system.

8. Use of an optical data storage medium according to claim 7, wherein the first optical surface is provided with a hydrophobic layer (10) that has a thickness smaller than 0.25λ/n.

9. Use of an optical data storage medium (5) according to claim 7 or 8, wherein the hydrophobic layer comprises a material selected from the group of poly-para-xylylenes, fluorocarbons and copolymers thereof.

## Patentansprüche

1. Optisches Aufzeichnungs- und Lesesystem zur Verwendung zusammen mit einem optischen Datenspeichermedium (5), wobei dieses System Folgendes umfasst:
- das Medium (5) mit einem auf einem Substrat (8) gebildeten Aufzeichnungsstapel (9), wobei dieser Aufzeichnungsstapel zum Aufzeichnen mit Hilfe eines fokussierten Strahlungsbündels (1) mit einer Wellenlänge λ in Luft geeignet ist, wobei der genannte Aufzeichnungsstapel eine erste optische Fläche (6) hat, die sich von dem Substrat (8) weiter weg befindet, und
- einen optischen Kopf (3) mit einem Objektiv (2) mit einer numerischen Apertur NA und wobei von diesem Objektiv (2) das fokussierte Strahlungsbündel beim Aufzeichnen ausstrahlt, wobei das Objektiv (2) an der Seite des Aufzeichnungsstapels (9) des genannten optischen Datenspeichermediums (5) vorgesehen ist und eine zweite optische Fläche (7) hat, die dem Aufzeichnungsstapel (9) näher liegt und zum Aufzeichnen/Auslesen mit einem freien Arbeitsabstand d_{F} von weniger als 50 µm von der ersten optischen Fläche (6) vorgesehen ist, **dadurch gekennzeichnet, dass** die zweite optische Fläche (7) mit einer transparenten hydrophoben Schicht (10, 11) versehen ist, die eine Brechzahl n hat und eine Dicke, die kleiner ist als 0,5 λ/n.

2. System nach Anspruch 1, wobei die zweite optische Fläche (7) mit einer hydrophoben Schicht (11) versehen ist, die eine Dicke im Wesentlichen gleich 0,25 λ/n hat.

3. System nach Anspruch 1, wobei der optische Kopf (3) weiterhin eine magnetische Spule (4) aufweist, die an einer Seite des optischen Kopfes (3) vorgesehen ist, die dem Aufzeichnungsstapel (9) am nächsten liegt, so dass eine optische Achse des optischen Kopfes (3) die Mitte der magnetischen Spule (4) durchquert und der Aufzeichnungsstapel (9) des optischen Datenspeichermediums (5) vom magnetooptischen Typ ist.

4. System nach Anspruch 3, wobei die magnetische Spule (4) einen Innendurchmesser kleiner als 60 µm hat.

5. System nach einem der Ansprüche 1 bis 4, wobei die hydrophobe Schicht (10, 11) ein Material enthält, selektiert aus der Gruppe von Poly-para-xylylenen, Fluorkohlenstoffen, und Copolymeren davon.

6. System nach einem der Ansprüche 3 bis 5, wobei die magnetische Spule (4) in einem teilweise transparenten Schieber vorgesehen ist, der dazu vorgesehen ist, in einem Abstand von > 0,5 λ/n und < 2 µm von der ersten Fläche zu schweben.

7. Verwendung eines optischen Datenspeichermediums (5) mit einem Aufzeichnungsstapel (9), der auf einem Substrat gebildet ist, wobei der genannte Aufzeichnungsstapel zum Aufzeichnen mit Hilfe eines fokussierten Strahlungsbündels (1) mit einer Wellenlänge λ in Luft geeignet ist, wobei der Aufzeichnungsstapel eine erste optische Fläche hat, die weiter von dem Substrat entfernt ist, und wobei die erste optische Fläche (6) mit einer transparenten hydrophoben Schicht (10) versehen ist, die eine Brechzahl n und eine Dicke hat, die kleiner ist als 0,5 λ/n in einem System nach einem der Ansprüche 1 bis 6 zur Vermeidung von Neukondensation von Wassertropen auf der zweiten optischen Fläche des genannten Systems.

8. Verwendung eines optischen Datenspeichermediums nach Anspruch 7, wobei die erste optische Fläche mit einer hydrophoben Schicht (10) versehen ist, die eine Dicke hat, die kleiner ist als 0,25 λ/n.

9. Verwendung eines optischen Datenspeichermediums (5) nach Anspruch 7 oder 8, wobei die hydrophobe Schicht ein Material aufweist, selektiert aus der Gruppe von Poly-para-xylylenen, Fluorkohlenstoffen, und Copolymeren davon.

## Revendications

1. Système optique d'enregistrement et de lecture pour être utilisé avec un support optique de stockage de données (5), ledit système comprenant :
- le support (5) ayant une pile d'enregistrement (9) qui est formée sur un substrat (8), ladite pile d'enregistrement étant appropriée à l'enregistrement au moyen d'un faisceau de rayonnement focalisé (1) avec une longueur d'onde λ en l'air, la pile d'enregistrement ayant une première surface optique (6) qui est la plus éloignée du substrat (8) ; et
- une tête optique (3) avec un objectif (2) ayant une ouverture numérique NA et objectif (2) duquel le faisceau de rayonnement focalisé (1) provient pendant l'enregistrement, l'objectif (2) étant disposé du côté de la pile d'enregistrement (9) dudit support optique de stockage de données (5) et ayant une deuxième surface optique (7) qui se situe le plus proche de la pile d'enregistrement (9), et étant adaptée à enregistrer/lire à une distance de fonctionnement libre d_{F} qui est inférieure à 50 µm de la première surface optique (6), **caractérisé en ce que** la deuxième surface optique (7) est pourvue d'une couche hydrophobe transparente (10, 11) qui présente un indice de réfraction n et qui présente une épaisseur étant inférieure à 0,5λ/n.

2. Système selon la revendication 1, dans lequel la deuxième surface optique (7) est pourvue d'une couche hydrophobe (11) qui présente une épaisseur étant sensiblement égale à 0,25λ/n.

3. Système selon la revendication 1, dans lequel la tête optique (3) comprend encore une bobine magnétique (4) étant disposée d'un côté de la tête optique (3) qui se situe le plus proche de la pile d'enregistrement (9) de telle façon qu'un axe optique de la tête optique (3) traverse le centre de la bobine magnétique (4) et dans lequel la pile d'enregistrement (9) du support optique de stockage de données (5) est du type magnéto-optique.

4. Système selon la revendication 3, dans lequel la bobine magnétique (4) présente un diamètre intérieur qui est inférieur à 60 µm.

5. Système selon l'une quelconque des revendications précédentes 1 à 4, dans lequel la couche hydrophobe (10, 11) comprend un matériau qui est sélectionné parmi le groupe constitué de poly-para-xylylènes, de fluorocarbones et de copolymères de ceux-ci.

6. Système selon l'une quelconque des revendications précédentes 3 à 5, dans lequel la bobine magnétique (4) est contenue dans un glisseur partiellement transparent qui est adapté de manière à voler à une distance supérieure à 0,5λ/n et inférieure à 2 µm de la première surface (6).

7. Utilisation d'un support optique de stockage de données (5) ayant une pile d'enregistrement (9) qui est formée sur un substrat (8), ladite pile d'enregistrement étant appropriée à l'enregistrement au moyen d'un faisceau de rayonnement focalisé (1), avec une longueur d'onde λ en l'air, la pile d'enregistrement ayant une première surface optique qui se situe dans un sens le plus à distance du substrat, et la première surface optique (6) est pourvue d'une couche hydrophobe transparente (10) qui présente un indice de réfraction n et qui présente une épaisseur étant inférieure à 0,5λ/n dans un système selon l'une quelconque des revendications précédentes 1 à 6 pour empêcher la recondensation de gouttelettes d'eau sur la deuxième surface optique dudit système.

8. Utilisation d'un support optique de stockage de données selon la revendication 7, dans laquelle la première surface optique est pourvue d'une couche hydrophobe (10) qui présente une épaisseur étant inférieure à 0,25λ/n.

9. Utilisation d'un support optique de stockage de données (5) selon la revendication 7 ou selon la revendication 8, dans laquelle la couche hydrophobe comprend un matériau qui est sélectionné parmi le groupe constitué de poly-para-xylylènes, de fluorocarbones et de copolymères de ceux-ci.
